(19) Europäisches Patentamt
European Patent Office
Office européen des brevets

(11) Veröffentlichungsnummer: **0 421 471 A1**


# (12) EUROPÄISCHE PATENTANMELDUNG


(21) Anmeldenummer: **90119177.5**

(22) Anmeldetag: **05.10.90**

(51) Int. Cl.5: **G08C 25/02**, H04Q 9/14, G05B 19/04

(30) Priorität: **06.10.89 DE 3933495**

(43) Veröffentlichungstag der Anmeldung: **10.04.91 Patentblatt 91/15**

(84) Benannte Vertragsstaaten: **AT BE CH DE DK ES FR GB GR IT LI LU NL SE**



(71) Anmelder: **MÜTEC MIKROTECHNIK UND ÜBERWACHUNGSSYSTEME GMBH**
**Prof.-Messerschmitt-Strasse 3**
**W-8014 Neubiberg(DE)**

(72) Erfinder: **Hoefer, Jürgen**
**Lena-Christ-Strasse 32**
**W-8012 Ottobrunn(DE)**
Erfinder: **Sporer, Hans, Dr.**
**Keuslinstrasse 6/1**
**W-8000 München 40(DE)**
Erfinder: **Kadur, Andreas**
**Flurstrasse 4**
**W-8301 Bruckberg Pörndorf(DE)**
Erfinder: **Achatz, Albert**
**Elektrastrasse 5/11**
**W-8000 München 81(DE)**

(74) Vertreter: **Strasser, Wolfgang, Dipl.-Phys et al**
**Patentanwälte Strohschänk, Uri & Strasser**
**Innere Wiener Strasse 8**
**W-8000 München 80(DE)**


## (54) Kommunikationsverfahren für eine Schaltungsanordnung, die aus einer Zentrale und mehreren Peripherieeinheiten besteht.


(57) Es wird ein Kommunikationsverfahren für eine Schaltungsanordnung beschrieben, die aus einer Zentrale (1) und mehreren Peripherieeinheiten (5) besteht, die miteinander und mit der Zentrale über einen Datenbus (3) verbunden sind. Jeder Peripherieeinheit ist eine Adresse zugeordnet, die in der Peripherieeinheit gespeichert ist. Die Zentrale sendet zur Aktivierung einer bestimmten Peripherieeinheit deren Adresse in Form von Signalimpulsen an alle Peripherieeinheiten aus und diese vergleichen die empfangenen Adressen mit der jeweils gespeicherten Adresse. Diejenige Peripherieeinheit, die Übereinstimmung zwischen der empfangenen und ihrer gespeicherten Adresse feststellt, geht in einen aktivierten Zustand über. Zur Erhöhung der Störsicherheit ist vorgesehen, daß jede Peripherieeinheit nach ihrer Aktivierung ein Kennungssignal, das sie eindeutig identifiziert, an die Zentrale zurücksendet. Eine besonders gute Zugriffsmöglichkeit der Zentrale zu den Peripherieeinheiten ergibt sich bei Verwendung eine einzigen bidirektionalen Datenübertragungsleitung dadurch, daß die Zentrale ihre Signale in Form kodierter Spannungsimpule sendet, während die Peripherieeinheiten mit kodierten Stromimpulsen antworten.





Xerox Copy Centre

BEFEHLE VON DATENBUS-STEUERUNG
RÜCKMEL-DUNG AN DATEN-BUS-STEUERUNG
BEFEHLSDEKODER/ ADRESSENVERGL.
OSZILLA-TOR
RÜCKMELDEEINHEIT
KENNUNG
DATEN
BEFEHLSDEKODER/ ADRESSENVERGL.
OSZILLA-TOR
RÜCKMELDEEINHEIT
KENNUNG
DATEN
Fig. 1

# KOMMUNIKATIONSVERFAHREN FÜR EINE SCHALTUNGSANORDNUNG, DIE AUS EINER ZENTRALE UND MEHREREN PERIPHERIEEINHEITEN BESTEHT

Die Erfindung betrifft ein Kommunikationsverfahren der im Oberbegriff des Anspruches 1 genannten Art.

Ein solches Verfahren ist beispielsweise aus der DE-OS 37 02 517 bekannt. Der dabei verwendete Datenbus umfaßt eine Vielzahl von Leitungen, von denen eine dazu verwendet wird, die von der Zentrale ausgesandten Adressen an die Peripherieeinheiten in Form von Zählimpulsen zu übertragen, die dazu dienen, in jeder Peripherieeinheit einen dort vorgesehenen Rückwärtszähler ausgehend von einem vorgegebenen Zahlenwert abwärts zählen zu lassen. Dieser Zahlenwert ist für jede Peripherieeinheit ein anderer und stellt deren Adresse dar. Er ist in der Peripherieeinheit gespeichert und wird zu Beginn eines jeden Abfragezyklusses in Antwort auf einen von der Zentrale ausgesendeten speziellen Rücksetzimpuls in den Rückwärtszähler eingelesen. Somit beginnt der Rückwärtszähler einer jeden Peripherieeinheit die Zählung der von der Zentrale kommenden Zähl- bzw. Adressenimpulse bei einem anderen Ausgangswert und erreicht daher den Zählerstand "Null", bei dem die zugehörige Peripherieeinheit in ihren aktivierten Zustand übergeht (in dem sie bis zum nächsten Zählimpuls bleibt), nachdem eine ihrem Anfangswert entsprechende Anzahl von Adressenimpulsen ausgesandt und empfangen worden ist. Werden die Anfangswerte der Rückwärtszähler so festgelegt, daß sie sich in einer vorgegebenen Reihenfolge jeweils um "Eins" erhöhen, so muß die Zentrale immer nur einen weiteren Zählimpuls aussenden, um eine bisher aktivierte Peripherieeinheit zu desaktivieren und gleichzeitig die in der gewählten Reihenfolge nächste Peripherieeinheit zu aktivieren. Gegenüber einem Adressierverfahren, bei dem zur Aktivierung einer Peripherieeinheit immer eine komplette, aus einer Vielzahl von Einzelimpulsen bestehende Adresse ausgesandt werden muß, hat dies den Vorteil, daß der Zeitraum, der benötigt wird, um von einer aktivierten Peripherieeinheit zur nächsten weiterzuschalten und dabei die bisher aktivierte Peripherieeinheit zu desaktivieren, ein Minimum aufweist.

Soll nun eine solche Schaltungsanordnung in einer stark mit Störsignalen belasteten Umgebung, beispielsweise als Kfz-Bordnetz eingesetzt werden, so besteht bei beiden obigen Adressierverfahren die Gefahr, daß von einer oder mehreren Peripherieeinheiten Störimpulse als Adressenimpulse interpretiert werden, was dazu führen kann, daß entweder mehrere Peripherieeinheiten gleichzeitig in den aktivierten Zustand übergehen oder daß statt der Peripherieeinheit, die eigentlich angewählt werden sollte, eine andere Peripherieeinheit aktiviert wird. In einem Kfz-Bordnetz sind den Peripherieeinheiten Betätigungsschalter, Verbraucher (beispielsweise Lampen, Heizungen, Elektromotoren usw.) und Sensoren (z.B. für den Öldruck, die Kühlwassertemperatur und dergleichen) nachgeschaltet. Von der Zentrale werden an die jeweils aktivierte Peripherieeinheit Ein- bzw. Ausschaltbefehle für den oder die nachgeschalteten Verbraucher übermittelt und von den aktivierten Peripherieeinheiten Schaltaufträge der Betätigungsschalter bzw. Statusberichte über den momentanen Schaltzustand der Verbraucher oder momentan erfaßte Meßwerte der Sensoren an die Zentrale zurückgemeldet. Hier hätten die oben genannten Störungen untragbare Folgen.

Somit liegt der Erfindung die Aufgabe zugrunde, ein Verfahren der eingangs genannten Art so weiterzubilden, daß mit einem möglichst geringen schaltungs- und verdrahtungstechnischen Aufwand eine möglichst große Störsicherheit erzielt werden kann.

Zur Lösung dieser Aufgabe sieht die Erfindung die im Anspruch 1 niedergelegten Merkmale vor.

Dadurch, daß jede angewählte Peripherieeinheit - vorzugsweise sofort nach ihrer Aktivierung - eine Kennung an die Zentrale zurücksendet, die sie eindeutig von allen anderen Peripherieeinheiten unterscheidet, kann die Zentrale überprüfen, ob die richtige Peripherieeinheit bereit ist, die auszusendenden Befehlssignale zu empfangen und/oder ihre Daten zurückzusenden. Ist das Ergebnis der Überprüfung positiv, kann der gewünschte Informationsaustausch beginnen bzw. fortgesetzt werden. Ist es negativ, so hat die Zentrale beispielsweise die Möglichkeit, einen sämtliche Rückwärtszähler der Peripherieeinheiten auf den Anfangswert setzenden Rücksetzimpuls und im Anschluß hieran die Adresse der eigentlich zu aktivierenden Peripherieeinheit erneut auszusenden, wodurch einerseits die fälschlicherweise angewählte Peripherieeinheit desaktiviert und andererseits bei einer fehlerfreien Adressenübertragung die richtige Peripherieeinheit angewählt wird. Erforderlichenfalls wird dies so lange wiederholt, bis die Überprüfung der von der jeweils aktivierten Peripherieeinheit zurückgesandten Kennung zeigt, daß die richtige Peripherieeinheit empfangs- und/oder sendebereit ist.

Dadurch, daß sowohl die von der Zentrale an die Peripherieeinheiten ausgesandten Signale als auch die von den Peripherieeinheiten an die Zentrale zurückübermittelten Daten auf ein und derselben, bidirektional verwendeten Kabelader übertragen werden, kann die Anzahl der für den Datenbus erforderlichen Kabeladern vermindert werden. Bei einer Verwendung als Kfz-Bordnetz umfaßt dann im günstigsten Fall das Kabel, das die Peripherieeinheiten miteinander und mit der Zentrale verbindet, nur zwei Adern, von denen die eine zur Spannungs-und Stromversorgung der in den Peripherieeinheiten befindlichen Elektronikkomponenten und die andere als bidirektionale Datenübertragungsleitung dient, während die Kfz-Karosserie als Systemmasse Verwendung findet.

Allerdings muß bei einer bidirektionalen Datenübertragungsleitung sichergestellt werden, daß die von einer gerade aktivierten Periphereinheit abgegebenen Informationen von den anderen Peripherieeinheiten nicht versehentlich als Signale der Zentrale aufgefaßt werden, was sie dazu ver anlassen könnte, ebenfalls in den aktivierten Zustand überzugehen und sowohl sich gegenseitig als auch die Zentrale durch Aussendung irregulärer Signale zu stören. Zwar ist es möglich, derartige "Irrtümer" mit Hilfe entsprechender Kodierverfahren auszuschließen, die es allen beteiligten Einheiten ermöglichen, jederzeit eindeutig zu erkennen, aus welcher Quelle auf der Datenleitung erscheinende Informationen stammen. Solche herkömmlichen Verfahren verursachen aber einen erhöhten Aufwand sowohl hinsichtlich der Kodierung als auch der Dekodierung und einen hiermit verbundenen Bedarf an zusätzlichen Bauelementen, was insbesondere dann, wenn in einem System eine große Zahl von Peripherieeinheiten benötigt wird, ein gravierender Nachteil ist, der durch die Einsparung einer Kabelader kaum oder nicht ausgeglichen wird.

Um diesen Nachteil trotz der Verwendung einer bidirektionalen Datenübertragungsleitung zu vermeiden, ist daher erfindungsgemäß vorgesehen, die Adressen- und Steuerbefehle der Zentrale in Form von kodierten Spannungsimpulsen und die Kennungen und Nachrichten der Peripherieeinheiten in Form von kodierten Stromimpulsen zu erzeugen und in die bidirektionale Datenübertragungsleitung einzuspeisen. Aufgrund dieser Maßnahmen können die Signal-Empfangsschaltungen der Peripherieeinheiten auf sehr einfache Weise und ohne großen Aufwand an Bauelementen so ausgebildet werden, daß sie nur auf Spannungsimpulse reagieren, während die Empfangsschaltung der Zentrale nur auf Stromimpulse anspricht. Dadurch wird erreicht, daß keine der Peripherieeinheiten die Signale einer anderen Peripherieeinheit empfangen oder gar mit Signalen der Zentrale verwechseln kann. Irrtümer und Störungen der oben beschriebenen Art sind damit ausgeschlossen.

Ein besonderer Vorteil der eben beschriebenen Maßnahmen besteht darin, daß eine defekte Peripherieeinheit, die über die Datenübertragungsleitung einen Dauerstrom zieht, die Funktionsfähigkeit des übrigen Systems nicht beeinträchtigt. Der von der defekten Peripherieeinheit aus der Zentrale gezogene Gleichstrom kann auf einfache Weise von den Stromimpulsen der übrigen Peripherieeinheiten getrennt werden, so daß deren Nachrichten ohne weiteres verständlich bleiben. Würde man hier statt mit Strom- mit Spannungsimpulsen arbeiten, wäre eine solche Trennung nicht möglich. Wegen der großen Zahl der in einem System verwendeten Peripherieeinheiten und wegen der Anordnung dieser Peripherieeinheiten in einer "feindlicheren" Umgebung (insbesondere bei Kfz-Bordnetzen) ist die Wahrscheinlichkeit, daß eine der Peripherieeinheiten ein Dauersignal auf die Datenübertragungsleitung gibt, wesentlich größer als die Wahrscheinlichkeit, daß ein solches Dauersignal von der Zentrale kommt. Somit ist es vorteilhaft, die von den Peripherieeinheiten zu übertragenden Signale in Form von Stromimpulsen und die Signale der Zentrale in Form von Spannungsimpulsen zu senden und nicht umgekehrt.

Insbesondere dann, wenn während eines Aktivierungszeitraumes zwischen der Zentrale und der aktivierten Peripherieeinheit längere Befehlssignal- und/oder Nachrichtenblöcke übermittelt werden, ist es zur weiteren Erhöhung der Störsicherheit vorteilhaft, wenn die die angewählte Peripherieeinheit eindeutig identifizierende Kennung wiederholte Male an die Zentrale übermittelt wird, um sicherzustellen, daß nicht aufgrund einer Störung anstelle der ursprünglich richtigen Peripherieeinheit inzwischen eine falsche Peripherieeinheit aktiviert worden ist.

Darüber hinaus ergibt sich in Verbindung mit der mehrfachen Wiederholung der von der Peripherieeinheit an die Zentrale zurückgesandten Kennung folgende vorteilhafte Weiterbildung: Wenn die Zentrale eine bestimmte Peripherieeinheit aktiviert, um von dieser Daten übermittelt zu bekommen, so muß sie dann, wenn die erste, vorzugsweise vor diesen Daten zurückgesandte Kennung nicht zur eigentlich gewünschten Peripherieeinheit paßt, nicht unbedingt in der oben beschriebenen Weise den Informationsaustausch abbrechen und nach Aussenden eines Rücksetzimpulses einen neuen Aktivierungsversuch für die eigentlich gewünschte Peripherieeinheit starten. Sie kann vielmehr die von der Peripherieeinheit kommenden Daten entweder einfach ignorieren oder vorläufig zwischenspeichern und für einen vorgebbaren Zeitraum abwarten, ob bei einer der Wiederholungen die richtige Kennung nicht doch noch kommt. Dies wird dann der Fall sein, wenn zwar die richtige Peripherieeinheit aktiviert worden war, deren zurückgesandte Kennung aber aufgrund einer Störung so verändert wurde, daß sie von der Zentrale nicht mehr identifiziert werden konnte. Die Wahrscheinlichkeit, daß eine solche Störung bei jeder Wiederholung der zurückgesandten Kennung wieder auftritt, ist äußerst klein. Kommt dann die richtige Kennung bei einer oder mehreren Wiederholungen doch noch zurück, so können die nachfolgenden bzw. zuvor zwischengespeicherten Daten der Peripherieeinheit einer weiteren Verarbeitung zugeführt werden.

Vorzugsweise kann die Zentrale die Länge des Warte-Zeitraumes variieren, um z. B. dann, wenn plötzlich übergeordnete Aktivitäten erforderlich werden, die unter einer bisher falschen Kennung sendende Peripherieeinheit zu desaktivieren und für die eigentliche gewünschte oder eine andere Peripherieeinheit einen neuen Aktivierungsversuch zu starten.

Die Maßnahme, die Signale der Zentrale einerseits und der Peripherieeinheiten andererseits in Form verschiedener elektrischer Größen zu übertragen, ermöglicht es weiterhin, daß die Zentrale trotz der Verwendung einer einzigen Datenübertragungsleitung nach der Aktivierung einer Peripherieeinheit nicht warten muß, bis diese ihr gesamtes zur Übertragung anstehendes Nachrichtenpaket gesendet hat. Vielmehr kann die Zentrale während eines Zeitraumes, in dem eine Rückmeldung von einer Peripherieeinheit erfolgt, jederzeit einen Befehl in Form eines oder mehrerer Spannungsimpulse aussenden, der die Rückmeldung der Peripherieeinheit abbricht und beispielsweise eine andere Peripherieeinheit aktiviert. Die Zentrale kann somit bei wichtigen Aktionen, z.B. bei Alarm jederzeit reagieren. Diese ständige sofortige Zugriffsmöglichkeit der Zentrale hat zur Folge, daß es nicht erforderlich ist, die zeitliche Länge der Rückmeldungen der Peripherieeinheiten auf ein absolutes Minimum zu beschränken, damit die für einen alle Peripherieeinheiten erfassenden Abfragezyklus benötigte Zeit (auch bei einer großen Zahl von Peripherieeinheiten) nicht zu lang wird. Vielmehr ist es möglich, in die von den Peripherieeinheiten zur Zentrale zu übertragenden Daten eine größere Zahl von Prüfbits einzubauen, um die Störsicherheit der Anordnung zu erhöhen. Auch können zumindest wichtige Nachrichtenteile der Peripherieeinheiten innerhalb eines Anwähl- bzw. Aktivierungszeitraumes mehrfach wiederholt übertragen und in der Zentrale beispielsweise auf Korreliertheit überprüft werden, ohne daß die Zentrale hierfür einen neuen Befehl aussenden muß.

Somit kann im Prinzip jede der Peripherieeinheiten der Zentrale eine große Datenmenge pro Aktivierungszeitraum anbieten, ohne daß die Zentrale gezwungen wäre, diese Datenmenge immer komplett übertragen zu lassen. So kann sie bei den meisten Abfragezyklen die Übertragung abbrechen, wenn die wichtigsten Daten übermittelt sind und beispielsweise nur bei jedem fünften oder zehnten Abfragezyklus sich auch die weniger wichtigen Daten übermitteln lassen.

Umgekehrt kann die Zentrale bei einer Peripherieeinheit "anhalten" und sich deren Daten über einen längeren Zeitraum hinweg kontinuierlich übermitteln lassen, was z.B. dann von Bedeutung ist, wenn der betreffenden Peripherieeinheit ein Meßfühler, beispielsweise ein Temperatursensor nachgeschaltet ist und der zeitliche Verlauf der von diesem Meßfühler erfaßten physikalischen Größe über längere Zeit lückenlos überwacht und dokumentiert werden soll.

Eine weitere denkbare Störung besteht darin, daß eine angewählte Peripherieeinheit nicht aufhört, ihre Nachrichten in die Datenübertragungsleitung einzuspeisen, obwohl ihr die Zentrale die "Sendeerlaubnis" entzogen und eine andere Peripherieeinheit aktiviert hat. Dies führt dann nach kurzer Zeit dazu, daß zwei Peripherieeinheiten gleichzeitig senden, so daß an der Zentrale unsinnige bzw. nicht mehr entwirrbare Datengemische ankommen.

Damit das System eine solche Situation erkennen und auf sie reagieren kann, ist vorgesehen, daß die Taktimpulse, die erforderlich sind, um die von einer Peripherieeinheit zu übertragenden Daten in Form digitaler Stromimpulse zu kodieren, mit Hilfe eines in der Peripherieeinheit selbst angeordneten Oszillators erzeugt werden, und daß die Oszillatoren der verschiedenen Peripherieeinheiten zueinander asynchron laufen. Das hat zwar zur Folge, daß jede Peripherieeinheit zumindest am Anfang ihrer Rückmeldetätigkeit einen Start- oder Synchronisationsimpuls an die Zen trale aussenden muß. Die hierfür benötigte Zeit spielt aber keine Rolle, da aus den oben genannten Gründen die Länge des Aktivierungszeitraumes nicht kritisch ist und quasi "beliebig" lang gewählt werden kann. Demgegenüber stellt es einen großen Vorteil dar, daß bei dem in Rede stehenden Störfall wegen des asynchronen Laufs der beteiligten Oszillatoren mehrstufige Stromimpulse mit irregulären, zu "falschen" Zeitpunkten auftretenden Impulsflanken entstehen; dies kann von der Zentrale ohne weiteres erkannt werden, so daß sie das Vorliegen einer derartigen Störung zumindest anzeigen kann.

Die Erfindung wird im folgenden anhand eines Ausführungsbeispiels unter Bezugnahme auf die Zeichnung beschrieben; in dieser zeigen:

Fig. 1 einen stark schematisierten Ausschnitt aus einer Schaltungsanordnung, bei der das erfindungsgemäße Kommunikationsverfahren Anwendung findet,

Fig. 2 ein vereinfachtes Impulsdiagramm zur Erläuterung des erfindungsgemäßen Kommunikationsverfahrens bei der in der Fig. 1 wiedergegebenen Anordnung, und

Fig. 3 ein Impulsdiagramm, das die Stromimpulse auf der Datenübertragungsleitung beim Auftreten einer bestimmten Störung wiedergibt.

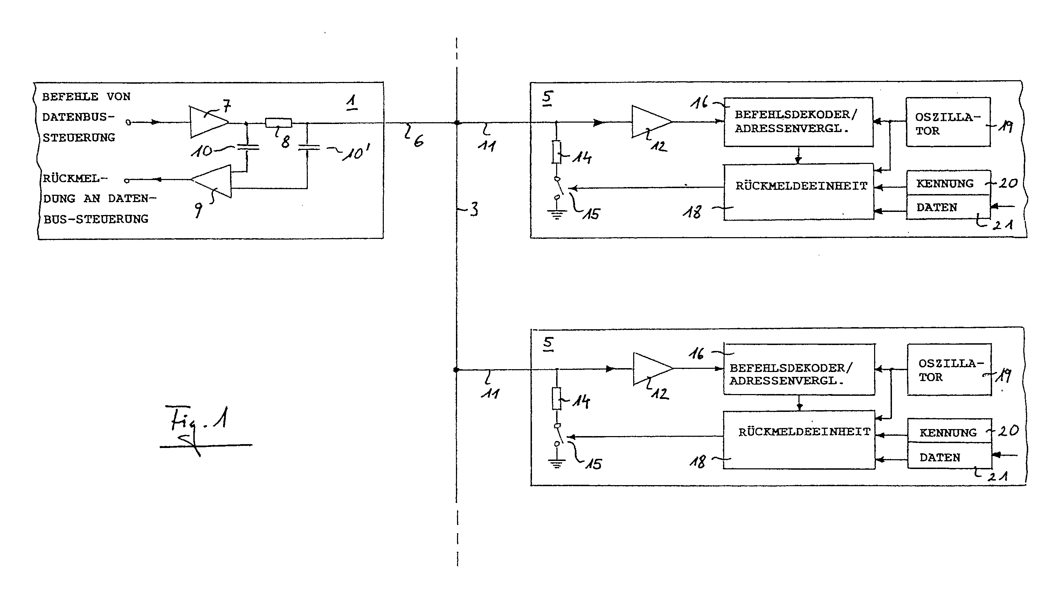

In Fig. 1 ist der Ein/Ausgangsteil einer Zentrale 1 dargestellt, der mit einer bidirektional betriebenen Datenübertragungsleitung 3 in Verbindung steht, an die eine Vielzahl von Peripherieeinheiten 5 angeschlossen ist, von denen in Fig. 1 nur zwei ausschnittsweise gezeigt sind.

Eine derartige Anordnung kann beispielsweise als Kraftfahrzeug-Bordnetz Verwendung finden, wobei wenigstens eine weitere, in der Fig. 1 nicht gezeigte Leitung vorhanden ist, die als Strom/Spannungs-Versorgungsleitung für die Zentrale 1 und die Peripherieeinheiten 5 dient, während als Masseleitung die Karosserie des Kraftfahrzeuges Verwendung finden kann.

Die Zentrale 1 umfaßt, ohne daß dies dargestellt wäre, unter anderem eine Mikroprozessoreinheit und eine Datenbus-Steuereinheit. Von letzterer sind lediglich ein die Ausgangs/Eingangs-Leitung 6 der Zentrale ansteuernder Ausgangstreiber 7, ein zwischen dem Ausgangstreiber 7 und der Ausgangs/Eingangs-Leitung 6 in Reihe liegender Meßwiderstand 8 und ein Eingangskomparator 9 wiedergegeben, dessen beide Eingänge die über dem Meßwiderstand 8 abfallende Spannung abgreifen. Zwischen die Abgriffspunkte am Meßwiderstand 8 und die Komparatoreingänge ist jeweils ein Kondensator 10, 10' geschaltet, so daß an den Komparator 9 nur von Stomimpulsen erzeugte Spannungen gelangen, während Gleichströme, die über den Meßwiderstand 8 fließen, ohne Einfluß bleiben. Dies hat den Vorteil, daß auch dann, wenn eine oder mehrere Peripherieeinheiten aufgrund eines Defektes einen Dauerstom über die Datenübertragungsleitung 3 ziehen, die Kommunikation der Zentrale 1 mit den anderen Peripherieeinheiten aufrechterhalten werden kann.

Zu jeder der beiden gezeigten Peripherieeinheiten 5 gehört eine Eingangs/Ausgangs-Leitung 11, an die einerseits der Eingang eines Schwellenwertdetektors 12 und andererseits über einen Strombegrenzungswiderstand 14 ein steuerbarer Schalter angeschlossen sind, dessen andere Seite zur Systemmasse führt.

Der Schwellenwertdetektor 12 liefert seine Ausgangssignale an einen Befehlsdekoder/Adressenvergleicher 16, der seinerseits eine Rückmeldeeinheit 18 mit Signalen versorgt. Diese Rückmeldeeinheit 18 erhält weitere Signale von einem Kennungsspeicher 20 und Daten von einem Daten-Zwischenspeicher 21, der seinerseits von einer nicht wiedergegebenen Steuereinheit mit Informationen versorgt wird. Um sowohl die Kennung als auch die im Datenzwischenspeicher 21 enthaltenen Daten an die Zentrale übertragen zu können, erzeugt die Rückmeldeeinheit 18 kodierte Signalimpulse, mit deren Hilfe der steuerbare Schalter 15 geschlossen und geöffnet wird.

Die hierfür benötigten Taktimpulse liefert ein Oszillator 19, der - soweit erforderlich - auch die übrigen Schaltungsteile seiner Peripherieeinheit mit Taktimpulsen versorgt. Im geschlossenen Zustand zieht der steuerbare Schalter 15 aus der Ausgangstreiberstufe 7 der Zentrale 1 einen Strom nach Masse, der über dem Meßwiderstand 8 einen seiner Größe entsprechenden Spannungsabfall erzeugt, der vom Eingangskomparator 9 erfaßt und als Eingangsimpuls an die Datenbus-Steuereinheit bzw. die Mikroprozessoreinheit der Zentrale 1 weitergegeben, dort dekodiert und einer weiteren Verarbeitung zugeführt wird.

Jede der Peripherieeinheiten 5 dient als Interface für eine oder mehrere nachgeordnete Einheiten. Diese nachgeordneten Einheiten können beispielsweise von Hand betätigbare Ein/Aus- bzw. Tastschalter sein, durch deren Betätigung der Befehl für das Ein- bzw. Ausschalten eines im Kraftfahrzeug befindlichen Verbrauchers wie z.B. der Scheinwerfer, der Innenbeleuchtung, der Heckscheibenheizung, eines Fensterhebers, eines Sitz-Verstellmotors und dergleichen gegeben werden soll. Weiterhin können solche den Peripherieeinhei ten 5 nachgeordnete Einheiten die steuerbaren Schalter sein, durch deren Schließen bzw. Öffnen die eben genannten Verbraucher tatsächlich an die Stromquelle des Kraftfahrzeugs angeschlossen bzw. von ihr getrennt werden. Weitere nachgeordnete Einheiten können Sensoren sein, mit deren Hilfe interessierende Größen wie z.B. die Kühlwassertemperatur, der Tankfüllstand, die Motordrehzahl usw. gemessen oder der Status bzw. Betriebszustand eines Verbrauchers überwacht wird.

Alle Befehle und Daten die zwischen den eben beschriebenen nachgeordneten Einheiten beim Betrieb eines Kraftfahrzeuges oder eines ähnlichen Systems übertragen werden müssen, laufen über die Datenübertragungsleitung 3 von den Peripherieeinheiten 5 zur Zentrale 1 bzw. von der Zentrale 1 zu den Peripherieeinheiten. Damit dieser Datenverkehr in geordneter Weise abgewickelt werden kann, ist, wie dies eingangs bereits für das aus der DE-OS 37 02 517 bekannte System beschrieben wurde, jeder der Peripherieeinheiten 5 eine Adresse so zugeordnet, daß die Zentrale 1 durch Aussenden von Adressenimpulsen, die als Zählimpulse für in jeder der Peripherieeinheiten 5 vorgesehene Rückwärtszähle dienen, die Peripherieeinheiten der Reihe nach anwählen, d.h. in einen aktivierten Zustand versetzen kann, in welchem die jeweils aktivierte Peripherieeinheit 5 so lange bleibt, bis von der Zentrale 1 der nächste Zählimpuls ausgesandt wird. Nur in diesem aktivierten Zustand ist die betreffende Peripherieeinheit 5 in der Lage, von der Zentrale 1 über die Datenübertragungsleitung 3 ausgesandte Befehlssignale zu empfangen und auszuführenn bzw. Informationen an die Zentrale zurückzusenden. Auf diese Weise ist zu einem gegebenen Zeitpunkt immer nur eine der Peripherieeinheiten 5 aktiv mit der Zentrale verbunden, während alle anderen warten, bis sie im weiteren Verlauf von der Zentrale her aktiviert werden.

Um nun z.B. die Scheinwerfer eines Kraftfahrzeuges einzuschalten, betätigt der Fahrer den entsprechenden Ein/Ausschalter, der als nachgeordnete Einheit über eine Peripherieeinheit 5 mit dem gesamten System verbunden ist. Diese Peripherieeinheit 5 registriert die Schaltzustandsänderung ihres nachgeordneten Schalters und gibt eine entsprechende Information in den Datenzwischenspeicher 21. Dort bleibt die Information, daß der zugehörige Schalter geschlossen worden ist, so lange gespeichert, bis die Zentrale 1 die betreffende Peripherieeinheit 5 aktiviert hat. Um der Zentrale zu erkennen zu geben, daß tatsächlich die gewünschte Peripherieeinheit aktiviert worden ist, ruft die Rückmeldeeinheit 18 zunächst die die betreffende Peripherieeinheit 5 eindeutig identifizierende Kennung aus dem Kennungsspeicher 20 ab und sendet diese Kennung in Form von kodierten Stromimpulsen, die, wie oben beschrieben mit Hilfe des steuerbaren Schalters 15 und des Strombegrenzungswiderstandes 14 erzeugt werden, an die Zenrale 1, die diese Kennung auf Richtigkeit überprüft. Ist diese Überprüfung positiv, so hält die Zentrale 1 dadurch, daß sie keinen weiteren Zählimpuls aussendet, die betreffende Peripherieeinheit 5 aktiviert, so daß die Rückmeldeeinheit 18 dann die im Datenzwischenspeicher 21 enthaltenen Daten ebenfalls in Form kodierter Stromimpulse an die Zentrale übertragen kann. Dort werden diese Daten dekodiert und die Zentrale erkennt im vorliegenden Beispiel, daß der von Hand betätigbare Schalter für die Scheinwerfer geschlossen bzw. in seine "EIN"-Stellung gebracht worden ist.

Diese Information wird in der Zentrale 1 so lange gespeichert, bis sie diejenige Peripherieeinheit 5 aktiviert hat, die als Interface für den oder die steuerbaren Schalter dient, bei deren Schließen die Scheinwerfer mit Strom versorgt werden. Bei kleineren Bordnetzen, die eine vergleichsweise geringe Zahl von Peripherieeinheiten 5 umfassen, kann die Zentrale 1 den laufenden Abfragezyklus einfach so lange mit normaler Geschwindigkeit fortsetzen, bis die zuletzt genannte Peripherieeinheit aktiviert worden ist. Bei größeren Bordnetzen könnte dies zu Verzögerungen führen. In diesem Fall sendet die Zentrale die Adressen-bzw. Zählimpulse mit hoher Folgegeschwindigkeit aus, so daß alle Peripherieeinheiten, die zwischen den Peripherieeinheiten liegen, zwischen denen die Information übertragen werden soll, nur kurz aktiviert und sofort wieder desaktiviert, d.h. also im Endeffekt übersprungen werden. Sobald die Peripherieeinheit 5 aktiviert ist, der die steuerbaren Schalter für die Scheinwerfer nachgeordnet sind, wartet die Zentrale 1 zunächst ab, ob die von dieser Peripherieeinheit 5 zurückgesandte Kennung zutreffend ist. Ist dies der Fall, dann sendet die Zentrale 1 einen Einschaltbefehl in Form eines oder mehrerer kodierter Spannungsimpulse, der bzw. die sich von den Adressen- bzw. Zählimpulsen z.B. durch ihre unterschiedliche zeitliche Länge unterscheiden können. Sie werden vom Befehlsdekoder/Adresenvergleicher 16 dekodiert und auf einer in Fig. 1 nicht gezeigten Leitung an eine ebenfalls nicht wiedergegebene Schaltersteuerung weitergeleitet, die daraufhin den oder die steuerbaren Schalter für die Scheinwerfer schließt. Die betreffende Peripherieeinheit 5 kann dabei vorzugsweise einen Sensor umfassen, der die korrekte Ausführung des Schalter-Schließbefehls überprüft und eine entsprechende Information in den Datenzwischenspeicher 21 gibt, aus dem sie von der Rückmeldeeinheit i8 ausgelesen und in Form von kodierten Stromimpulsen zur Zentrale 1 übertragen werden.

In entsprechender Weise kann dann auch ein vom Fahrer des Kraftfahrzeuges durch Betätigung des betreffenden Schalters gegebener Befehl zum Ausschalten der Scheinwerfer zuerst von der diesem Schalter zugeordneten Peripherieeinheit 5 an die Zentrale 1 und dann von dieser an die Peripherieeinheit 5 weitergegeben werden, die dem oder den steuerbaren Schaltern für die Scheinwerfer zugeordnet ist. Entsprechendes gilt auch für die Befehls-und Betätigungsschalter anderer Verbraucher im Kraftfahrzeug. Sind einer Peripherieeinheit nur ein oder mehrere Meßfühler nachgeordnet, so werden beim Anwählen dieser Peripherieeinheit von der Zentrale keine besonderen Befehlssignale ausgesandt. Vielmehr wird diese Peripherieeinheit von der Zentrale her so lange aktiviert gehalten, bis sie die im Datenzwischenspeicher 21 enthaltenen Meßwerte ihrer nachgeordneten Fühler übertragen hat bzw. bis die Zentrale 1 die Übertragung abbricht, weil die wichtigsten Daten übertragen sind bzw. das sofortige Aktivieren einer anderen Übertragungseinheit erforderlich geworden ist.

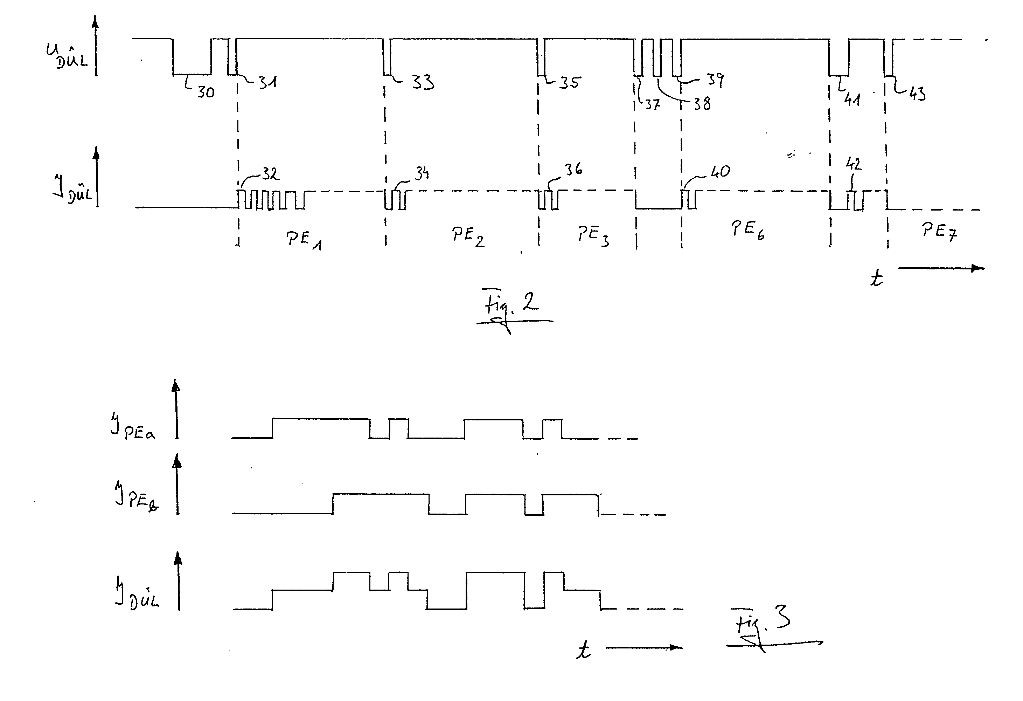

In Fig. 2 ist ein Impulsdiagramm wiedergegeben, das in stark vereinfachter Form den Informationsaustausch zwischen der Zentrale und den Peripherieeinheiten nach dem erfindungsgemäßen Kommunikationsverfahren zeigt. Zu diesem Zweck sind über einer Zeitachse in der oberen Zeile der Spannungsverlauf auf der Datenübertragungsleitung und in der unteren Zeile der Stromverlauf auf dieser Datenübertragungsleitung wiedergegeben. Der Ausgangstreiber der Zentrale ist ohne weiteres in der Lage, trotz der von der jeweils aktivierten Peripherieeinheit gezogenen Ströme die Spannung auf der Datenübertragungsleitung nahezu konstant zu halten. Der Meßwiderstand 8 (in Fig. 1) kann einen so geringen Wert haben, daß die an ihm auftretenden Spannungsabfälle zwar vom Eingangskomparator 9 ohne weiteres erfaßt werden können, auf der Datenübertragungsleitung 3 aber nicht merklich in Erscheinung treten.

Wie man der Fig. 2 entnimmt, arbeitet die Zentrale bei der Aussendung ihrer Signale mit einer invertierten Logik, d.h. der logischen "Null" entspricht ein hoher Spannungspegel, während eine logische "Eins" durch einen niederen Spannungspegel wiedergegeben wird. Dadurch liegt in den Zeitspannen, in denen die Zentrale keine Signale aussendet, auf der Datenübertragungsleitung eine hohe Spannung, die es der jeweils aktivierten Peripherieeinheit ermöglicht, aus dieser Datenübertragungsleitung durch Schließen und Öffnen ihres steuerbaren Schalters 15 über den Strombegrenzungswiderstand 14 Stromimpulse zu ziehen.

Wie man der obersten Zeile der Fig. 2 entnimmt, sendet die Zentrale zunächst einen Rücksetzimpuls 30 aus, mit dessen Hilfe, wie oben bereits erwähnt, die programmierbaren Rückwärtszähler aller Peripherieeinheiten auf ihren jeweiligen Ausgangszählwert gesetzt werden. Einige Zeit später sendet die Zentrale dann einen ersten Zählimpuls 31, der sich vom Setzimpuls 30 durch seine wesentlich kürzere zeitliche Länge unterscheidet. Auch der erste Zählimpuls 31 gelangt an alle Peripherieeinheiten, von denen jede einen Impulslängendiskriminator aufweist, der erkennt, daß es sich nunmehr um einen Zählimpuls handelt, den er dem Zähleingang seines nachgeordneten Rückwärtszählers zuführt. Dadurch erniedrigt sich der in jedem Rückwärtszähler enthaltene Anfangszählwert um den Wert "Eins", und die erste Peripherieeinheit, deren Adresse "EINS" lautet, wird dadurch aktiviert, daß am Ausgang ihres Rückwärts zählers ein das Erreichen des Zählerstandes "Null" anzeigendes Signal erscheint. Hierauf beginnt die in dieser Peripherieeinheit $PE_1$ enthaltene Rückmeldeeinheit 18 mit Hilfe der im Kennungsspeicher 20 enthaltenen Information eine die Kennung der betreffenden Peripherieeinheit in kodierter Form enthaltende Impulsfolge zu erzeugen, mit der sie den zugehörigen Schalter 15 ansteuert. Wie man der unteren Zeile der Fig. 2 entnimmt, wird als erstes jedoch ein Start- bzw. Synchronisations-Stromimpuls 32 ausgesandt, der sich von den nachfolgenden Stromimpulsen durch seine unterschiedliche zeitliche Länge unterscheidet. Nach der Aussendung ihrer Kennung sendet die angewählte Peripherieeinheit die in ihrem Datenzwischenspeicher 21 enthaltenen Informationen ebenfalls in Form von Stromimpulsen.Dies ist in Fig. 2 nur durch eine gestrichelte Linie angedeutet.

Nachdem die erste angewählte Peripherieeinheit $PE_1$ ihre gesamten Informationen an die Zentrale übermittelt hat, sendet die Zentrale einen zweiten Zählimpuls 33, der die bisher angewählte Peripherieeinheit $PE_1$ desaktiviert, da deren Rückwärtszähler nach -1 zählt. Außerdem aktiviert der Zählimpuls 33 die zweite Peripherieeinheit $PE_2$, deren Adresse "ZWEI" lautet. Auch diese zweite aktivierte Peripherieeinheit $PE_2$ beginnt die Übermittlung ihrer Nachrichten an die Zentrale mit einem Start- bzw. Synchronisations-Stromimpuls 34, an den sich dann die weiteren Informationsbits anschließen. Zweck dieser Start- bzw. Synchronisationsimpulse ist es, anzuzeigen, daß die aktivierte Peripherieeinheit mit ihrer Rückmeldung beginnt bzw. daß ein bereits gesendeter Rückmeldungsteil wiederholt wird.

Durch das Aussenden eines Zählimpulses 35 desaktiviert die Zentrale die zweite angewählte Peripherieeinheit $PE_2$, nachdem deren gesamter Informationsblock übertragen ist und aktiviert die dritte Peripherieeinheit $PE_3$, deren Adresse "DREI" lautet und deren Rückwärtszähler inzwischen auf den Zählwert "Null" heruntergezählt hat. Auch diese dritte Peripherieeinheit antwortet zunächst mit einem Synchronisations-Stromimpuls 36, dem dann weitere die Kennung und eine zu übertragende Nachricht kodierende Stromimpulse folgen. Bei dieser Peripherieeinheit $PE_3$ wartet die Zentrale aber nicht die Übertragung des gesamten Informationspaketes ab. Vielmehr entzieht sie durch das Aussenden eines weiteren Zählimpulses 37 der Peripherieeinheit $PE_3$ die Sendeerlaubnis. Da die Zentrale aus irgendwelchen Gründen sofort zur Peripherieeinheit $PE_6$ mit der Adresse "SECHS" weiterschalten möchte, emittiert sie nach dem Zählimpuls 37 in schneller Folge zwei weitere Zählimpulse 38 und 39, so daß den Peripherieeinheiten mit den Adressen "VIER" und "FÜNF" keine Zeit bleibt, um mit der Übertragung ihrer Kennungen und/oder Daten zu beginnen. Statt dessen reagiert nach dem Aussenden des Zählimpulses 39 die Peripherieeinheit $PE_6$ mit der Übertragung eines Synchronisations-Stromimpulses 40, an den sich dann ihre Kennung und weitere Daten anschließen. Nachdem diese Übertragung beendet ist, sendet die Zentrale an die immer noch aktivierte Peripherieeinheit $PE_6$ einen Schaltbefehlsimpuls 41, der sich sowohl vom Setzimpuls 30 als auch den Zählimpulsen 31 bis 39 durch seine unterschiedliche zeitliche Länge unterscheidet. Die Peripherieeinheit $PE_6$ empfängt den Schaltimpuls 41 und quittiert ihn durch die Rücksendung eines weiteren Synchronisations-Stromimpulses 42 und einer den Empfang und die Ausführung des Schaltbefehls bestätigenden Information, die in Fig. 2 wieder nur durch gestrichelte Linien angedeutet ist. Hieran anschließend emittiert die Zentrale den nächsten Zählimpuls 43, der die Peripherieeinheit $PE_7$ mit der Adresse "SIEBEN" aktiviert, usw.

Man sieht aus diesen Beispielen, daß die Zentrale aufgrund des erfindungsgemäßen Kommunikationssystems einen außerordentlich schnellen und einfachen Zugriff zu jeder beliebigen Peripherieeinheit besitzt, obwohl zur Datenübertragung in beiden Richtungen nur eine einzige Datenübertragungsleitung verwendet wird. Wegen dieser guten Zugriffsmöglichkeit können die von den Peripherieeinheiten an die Zentrale zu übertragenden Datenblöcke "beliebig" lang ausgebildet werden, ohne daß deswegen die für das Durchlaufen eines gesamten Abfragezyklusses benötigte Zeit übermäßig lang wird. Die Zentrale kann ja jederzeit dann, wenn sie die wichtigsten Daten einer Peripherieeinheit erhalten hat, dieser Peripherieeinheit die Senderlaubnis entziehen und die weniger wichtigen Daten erst bei einem späteren Abfragezyklus abrufen. Dadurch, daß die Zentrale nach der Aktivierung einer beliebigen Peripherieeinheit längere Zeit keinen weiteren Zählimpuls aussendet, kann sie sich von dieser Peripherieeinheit eine Vielzahl von Daten übermitteln lassen, beispielsweise die Meßergebnisse eines dieser Peripherieeinheit nachgeordneten Sensors, der einen Parameter überwacht, dessen zeitlicher Verlauf längere Zeit lückenlos aufgenommen werden soll.

In Fig. 3 ist mit wesentlich gedehntem Zeitmaßstab ein Impulsdiagramm wiedergegeben, das eine vorteilhafte Eigenschaft erläutert, die dadurch entsteht, daß die Oszillatoren der verschiedenen Peripherieeinheiten asynchron schwingen. In den beiden oberen Zeilen $I_{PEa}$ und $I_{PEb}$ sind die Stromimpulse von zwei Peripherieeinheiten a) und b) wiedergegeben, die aufgrund einer Störung gleichzeitig senden. Die unterste Zeile der Fig. 3 gibt den resultierenden Strom auf der Datenübertragungsleitung wieder, wie er von der Zentrale in einem solchen Fall wahrgenommen wird. Man sieht, daß bei dem hier angenommenen Störfall nicht nur zwei unterschiedlich große Stromamplituden erzeugt werden, sondern daß auch Impulsflanken zu völlig irregulären Zeitpunkten auftreten. Dies wäre nicht der Fall, wenn die Oszillatoren der Peripherieeinheiten von der Zentrale her synchronisiert würden. Somit kann die Zentrale den Störfall ohne weiteres erkennen und in der vorgegebenen Weise reagieren.

## Ansprüche

1. Kommunikationsverfahren für eine Schaltungsanordnung, die aus einer Zentrale und mehreren Peripherieeinheiten besteht, die miteinander und mit der Zentrale über eine als Datenbus ausgebildete Leitung verbunden sind, wobei
- jeder Peripherieeinheit eine Adresse zugeordnet und in der Peripherieeinheit gespeichert ist,
- die Zentrale zur Aktivierung einer bestimmten Peripherieeinheit deren Adresse in Form von Signalimpulsen an die Peripherieeinheiten aussendet,
- die Peripherieeinheiten die empfangenen Adressen mit der jeweils gespeicherten Adresse vergleichen, und
- diejenige Peripherieeinheit, die Übereinstimmung zwischen einer empfangenen und ihrer gespeicherten Adresse feststellt, in einen aktivierten Zustand übergeht, in dem sie von der Zentrale ausgesandte Steuerbefehle akzeptiert und/oder Nachrichten an die Zentrale sendet,

dadurch **gekennzeichnet,** daß jede Peripherieeinheit nach ihrer Aktivierung zumindest einmal ein Kennungssignal, das sie eindeutig identifiziert, an die Zentrale zurücksendet,daß sowohl die von der Zentrale ausgesandten Adressensignale und Steuerbefehle als auch die von den Peripherieeinheiten zurückgesandten Kennungssignale und Nachrichten auf ein und derselben bidirektional betriebenen Busleitung übertragen werden, und daß die Adressensignal und Steuerbefehle der Zentrale in Form von kodierten Spannungsimpulsen und die Kennungssignale und Nachrichten der Peripherieeinheiten in Form von kodierten Stromimpulsen übertragen werden.

2. Kommunikationsverfahren nach Anspruch 1, dadurch **gekennzeichnet,** daß eine aktivierte Peripherieeinheit das Kennungssignal sofort nach ihrer Aktivierung zurücksendet.

3. Kommunikationsverfahren nach Anspruch 1 oder 2, dadurch **gekennzeichnet,** daß eine aktivierte Peripherieeinheit während eines Aktivierungszeitraumes ihr Kennungssignal wiederholte Male zurücksendet.

4. Kommunikationsverfahren nach Anspruch 3, dadurch **gekennzeichnet,** daß die Zentrale dann, wenn eine oder mehrere von einer angewählten Peripherieeinheit zurückgesandten Kennungen falsch sind, für einen vorgebbaren Zeitraum auf das Auftreten einer richtigen zurückgesandten Kennung wartet, und dann, wenn sie wenigstens eine solche richtige Kennung empfängt, die von dieser Peripherieeinheit erhaltenen Daten einer weiteren Verarbeitung zuführt.

5. Kommunikationsverfahren nach Anspruch 4, dadurch **gekennzeichnet,** daß der vorgebbare Zeitraum von der Zentrale in Abhängigkeit von den momentanen Erfordernissen des Systems variiert werden kann.

6. Kommunikationsverfahren nach Anspruch 3, dadurch **gekennzeichnet,** daß die Zentrale dann, wenn eine oder mehrere von einer angewählten Peripherieeinheit zurückgesandten Kennungen falsch sind, für eine vorgebbare Anzahl von Kennungen auf das Auftreten einer richtigen zurückgesandten Kennung wartet, und dann, wenn sie wenigstens eine solche richtige Kennung empfängt, die von dieser Peripherieeinheit erhaltenen Daten einer weiteren Verarbeitung zuführt.

7. Kommunikationsverfahren nach Anspruch 6, dadurch **gekennzeichnet,** daß die vorgebbare Anzahl von Kennungen von der Zentrale in Abhängigkeit von den momentanen Erfordernissen des Systems variiert werden kann.

8. Kommunikationsverfahren nach einem der Ansprüche 1 bis 7, dadurch **gekennzeichnet**, daß jede Peripherieeinheit einen asynchron schwingenden Oszillator umfaßt, mit dessen Hilfe die kodierten Stromimpulse von der Peripherieeinheit selbständig erzeugt werden.

9. Kommunikationsverfahren nach einem der Ansprüch 1 bis 8, dadurch **gekennzeichnet,** daß die Zentrale durch Aussenden eines entsprechenden Befehls jederzeit die Rückmeldung einer gerade aktivierten Peripherieeinheit unterbrechen und eine andere Peripherieeinheit aktivieren kann.

10. Kommunikationsverfahren nach Anspruch 9, dadurch **gekennzeichnet,** daß eine aktivierte Peripherieeinheit zumindest Teile der von ihr zu übertragenden Nachrichten so lange wiederholt, bis sie von der Zentrale unterbrochen wird.

OSZILLA-
TOR
KENNUNG
DATEN
BEFEHLSDEKODER/
ADRESSENVERGL.
RÜCKMELDEEINHEIT
OSZILLA-
TOR
KENNUNG
DATEN
BEFEHLSDEKODER/
ADRESSENVERGL.
RÜCKMELDEEINHEIT
BEFEHLE VON
DATENBUS-
STEUERUNG
RÜCKMEL-
DUNG AN DATEN-
BUS-STEUERUNG
Fig. 1

30
31
32
33
34
35
36
37
38
39
40
41
42
43
PE1
PE2
PE3
PE6
PE7
t
Fig. 2
Fig. 3

Europäisches Patentamt

# EUROPÄISCHER RECHERCHENBERICHT

Nummer der Anmeldung

**EP 90 11 9177**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | DE-A-2 521 388 (HARTMANN & BRAUN) * Seite 4, Absatz 4 - Seite 5, Absatz 1 * * Seite 5, letzter Absatz - Seite 7, Absatz 1 @ Seite 12, Absatz 2; Figur 1 @ Seite 13, Absatz 2 * | 1,2,3,4, 6-9 | G 08 C 25/02 H 04 Q 9/14 G 05 B 19/04 |
| | – – – | | |
| A | DE-A-3 508 562 (PHILIPS PATENTVERWALTUNG) * Seite 10, Absatz 4 - Seite 12, Absatz 2 * * Seite 5, Absatz 3; Figuren 1, 2 * * Seite 6, Absatz 2 * | 1,3-6 | |
| | – – – – – | | |

| RECHERCHIERTE SACHGEBIETE (Int. Cl.5) |
|---|
| G 05 B |
| G 08 C |
| H 04 Q |

Der vorliegende Recherchenbericht wurde für alle Patentansprüche erstellt

| Recherchenort | Abschlußdatum der Recherche | Prüfer |
|---|---|---|
| Den Haag | 18 Dezember 90 | NETTESHEIM J.F. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument